# EUROPEAN PATENT SPECIFICATION

(11) **EP 3 406 529 B1**
(45) Date of publication and mention of the grant of the patent: **20.11.2019**
(21) Application number: 18173550.7
(22) Date of filing: 22.05.2018
(51) Int. Cl.: B64F 1/315, E04F 11/025

(54) **PARALLELOGRAM STAIRCASE WITH WALKING SURFACES INCLINE SYSTEM FOR EXPANDING THE WORK AREA**
PARALLELOGRAMTREPPE MIT NEIGUNGSVERSTELLUNG DER STUFEN ZUR AUSDEHNUNG DES ARBEITSBEREICHS
ESCALIER PARALLÉLOGRAME AVEC RÉGLAGE D'INCLINAISON DES MARCHES POUR EXPANDER LE DOMAINE DE TRAVAIL

(30) Priority: 24.05.2017 SI 201700146
(43) Date of publication of application: 28.11.2018
(73) Proprietor: Tips d.o.o., 8273 Leskovec pri Krshem (SI)
(72) Inventor: Sneberger, Silvo, 8250 Brezice (SI); Pustavrh, Robert, 8273 Leskovec pri Krskem (SI); Smole, Marjan, 3257 Podsreda (SI)
(74) Representative: Flak, Antonija

(56) References cited:
- DE-A1- 4 243 998
- GB-A- 594 643
- US-A- 3 962 838

## Description

### Field of the invention

The invention is classified as a flexible staircase of passenger airplane stairs in the field of workflows and transport.

### The technical problem

The known parallelogram staircase is based on a fourfold mechanism, which has the shape of a parallelogram, where two opposite sides are parallel and equal. The bottom and upper sides of the parallelogram consist of the undercarriage, the optional step or the platform, while the left and the right sides consist of connections, which are articulately fastened to the undercarriage and on which the steps and the platform are articulately fastened. Article 5.3.1 of the currently valid standard for passenger stairs EN 12312-1:2013 prescribes that the stairs must have consistent depth and height. These are prescribed in Article 5.3.2, where it is specified that the height of an individual step can be between 140mm and 210mm and the depth between 250mm and 320mm, whereby the sum of the height and the depth of an individual step must be 460 ± 10mm.

The height of the stairs platform is adjusted by the lift assembly which is articulately fastened to the undercarriage and the platform, thus also changing the slope of the entire staircase, which is in Article 5.3.3 prescribed between 24° and 40°. At the optional slope of the stairs and the platform the walking surfaces of the stairs and the platform are parallel to each other and the undercarriage, and the spacing between them is uniform. The number of the stairs in the parallelogram staircase is determined according to the desired platform height range, taking into account the applicable standard for passenger stairs EN 12312-1.

Different types of aircraft have door thresholds of different heights, which for particular types of aircraft also change according to their load. The Boeing B737 airplanes with the height of their thresholds between 2.46m and 2.79m can be equipped with passenger parallelogram stairs with 15 stairs and a platform. The Airbus A318, A319, A320 and A321 airplanes with the height of their door thresholds between 3.42m and 3.73m can be equipped with passenger parallelogram stairs with 17 stairs and a platform. The mentioned Boeing and Airbus airplanes have according to the data of the Eurostat EU statistical office performed more than 60% of all flights in the European Union in 2015 and are thus the most often equipped airplanes in European airports, while their use is still increasing. Due to the constant increase in the number of these airplanes, the airports need more and more steps for their management. The number of passenger stairs further increases due to the fact that the same passenger stairs with the known parallelogram staircase which are built in accordance with the current standards do not enable the management of all the mentioned airplanes. One possibility to reduce the number of necessary passenger stairs is for the stairs not to meet the applicable standards, which raises concerns about their safety. Alternatively, a solution can be found, which enables an increased working area of passenger stairs under consideration of the applicable standards and the essential health and safety requirements which they foresee.

The invention solves the technical problem in question with a parallelogram staircase which expands the work area by fully taking advantage of the changes of angles and geometry distances of the parallelogram staircase which are permitted by the EN 12312-1.

### State of the art

All mobile devices for loading and unloading airplanes can have their height adjusted, but the solutions are construction-wise solved differently than in the case of the invention in question.

According to the patent DE102012025630 lifting platforms with a staircase enable a large range of heights, but their overall dimensions are large as well. The bottom stair of the flexible part of the device is not always as high as the rest of the stairs and the height adjustment system lifting the entire flexible part is also more complex. The lifting platform with the ramp according to the patent US9238512 is designed similarly, but to reach the same height range the overall dimensions of the device are even larger due to the smaller slope of the ramp.

The telescopic passenger stairs which are known from the patents GB1360831 and EP0429033 have a large height range, but their structure and functioning are more complex, since they use two systems to adjust the height. The first changes the slope of the staircase and the second telescopes the staircase. The stairs are fixed, so they always have the same height and depth. The passenger stairs according to the patent CN103085989 also have a telescopic staircase, but to achieve the extremely large height range the height and the depth of the stairs are also adjusted, so the device consequently has a more complex construction.

The utility model of the DE9106146 describes the passenger stairs with a parallelogram staircase, where the height is adjusted by modifying the staircase slope. When adjusting the slope of the staircase, the stairs remain parallel to the undercarriage. The bottom bracket of the staircase is adjusted so that there is increased spacing between the platform attachments on the connection. When changing the slope of the staircase, the incline of the platform changes as well, and the height range it reaches is consequently larger. But because only the incline of the platform changes and not the incline of the stairs, the platform height range can under consideration of EN 12312-1:2013 increase only by 20-25%.

The German patent DE4243998 discusses a solution for passenger stairs with a parallelogram staircase, which has an additional connection between the undercarriage and the platform. Due to the position of the attachments of the additional connection on the undercarriage and platform, all walking surfaces incline when changing the slope of the staircase, but they remain parallel to each other. With the incline of all walking surfaces the height range of the platform can under consideration of the EN 12312-1:2013 increase by more than 50%. The additional connection is a supporting element, so it must bear the appropriate loads, while it occupies a space under the platform, where it is necessary to align its movement with the movement of the linear actuator and other present components. This invention also achieves an increased working area through the incline of the walking surfaces, but with a different design solution than the invention in question.

The present invention increases the work area of the parallelogram passenger stairs like the already described utility model DE9106146 and the patent DE4243998 with the incline of the walking surfaces by ± 3°, which is enabled by the currently valid passenger stairs standard EN 12312-1:2013 in Article 5.1.5. Because all walking surfaces incline, the height range of the platform is under consideration of the EN 12312-1:2013 increased by more than 50%. It differs from the already known solutions by achieving the change of the incline of the walking surfaces of the stairs and the platform with a customised junction of the staircase to the undercarriage. This does not necessitate any additional elements on the passenger stairs, and the staircase itself does not take up any more space.

Document GB 594 643 describes a stand, for use in servicing aeroplanes, that has a platform adapted to be lowered and raised relative to a rectangular base frame by means of two pairs of members having one end pivotally connected to the platform and the other end pivoted to the base, and a hydraulic piston and cylinder assembly pivoted, at one end, to a cross member on the base and, at the other end, to a cross member, the point of attachment of the assembly to the base and of the members to the base being adjacent each other, whereby the distance through which the platform is moved is greater than the corresponding relative displacement between the piston and the cylinder. Steps are provided by U-shaped bars pivoted to the members. The steps remain horizontal in any position of the platform owing to the pivotal connections. Guard rails are pivoted to supports. The base is mounted on wheels and is provided with a telescopic tow bar. The hydraulic system comprises the member, serving as a reservoir, a force pump, actuated by a lever, a one-way valve and a hand-operated valve. In operation, to raise the platform, the valve 58 is closed and the pump operated, this draws fluid from the reservoir through the tubes and forces it through the valve to the cylinder. To lower the platform the valve is opened and the fluid is expelled from the cylinder by the weight of the apparatus acting on the piston. To prevent accidental lowering of the platform a pin is passed through one of several openings in the piston.

### Description of the invention

Parallelogram staircase with the walking surfaces incline system for expanding the work area according to the invention enables the achievement of a maximum height range of the passenger stairs platform under consideration of the provisions regarding the slope of the staircase, the height and the depth of the stairs and the incline of the walking surfaces of the applicable EN 12312-1 standard, which the latter prescribes with respect to the safety of the users of the stairs. When changing the platform height, the incline of the walking surfaces of the stairs from the horizontal plane changes simultaneously with the slope of the staircase, whereby the walking surfaces always remain parallel.

The parallelogram staircase according to the present invention is defined in claim 1, with preferred embodiments defined in the dependent claims. In general, it consists of a platform and multiple steps, supported by the bottom and top link, on which the stairs and the platform are articulately fastened to form parallelograms and so that their walking surfaces are permanently parallel. To increase the working area, the distance between the attachments of the bottom and the top link to the undercarriage which is smaller than the attachments of an individual step or platform to the bottom and top link is of key importance, thereby changing the slope of the staircase and enabling the change of the incline of all walking surfaces of the passenger stairs. Due to the change of the staircase geometry and the slope of the walking surfaces while changing the height of the platform, the attachments of the bottom link to the undercarriage are linearly movable, while the bottom link has the appropriate shape for the position of the attachments. The top link is mounted to the undercarriage articulately.

Parallelogram staircase with the walking surfaces incline system for expanding the work area according to the invention will be described in more detail below based on an embodiment of passenger stairs with 16 steps and figures, which show:
- Figure 1: passenger stairs with a parallelogram staircase according to the invention
- Figure 1a: passenger stairs with a better visible parallelogram staircase according to the invention
- Figure 2: parallelogram staircase step
- Figure 3: top link of the parallelogram staircase
- Figure 4: bottom link of the parallelogram staircase
- Figure 5: main frame of the parallelogram staircase platform
- Figure 6: rear part of the undercarriage with fastening points of the parallelogram staircase
- Figure 7: attachment 1a
- Figure 8: attachment 1b
- Figure 9: attachment 5a or 5b
- Figure 10: attachment 2a or 2b

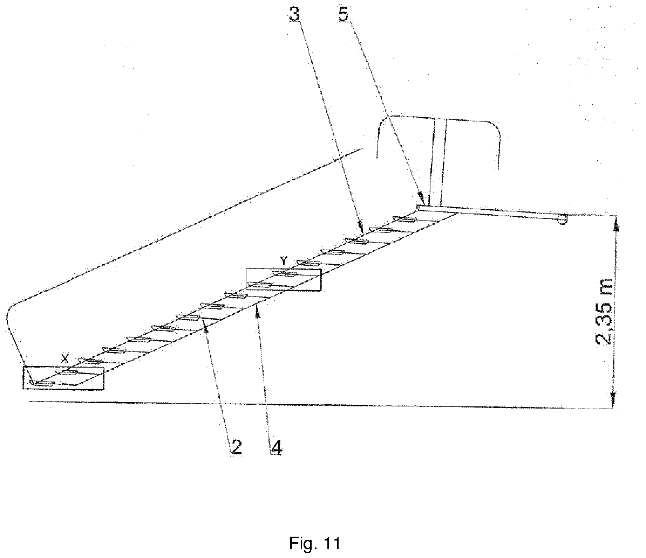

- Figure 11: schematic display of the parallelogram staircase according to the invention in the lower position
- Figure 12: X detail
- Figure 13: Y detail

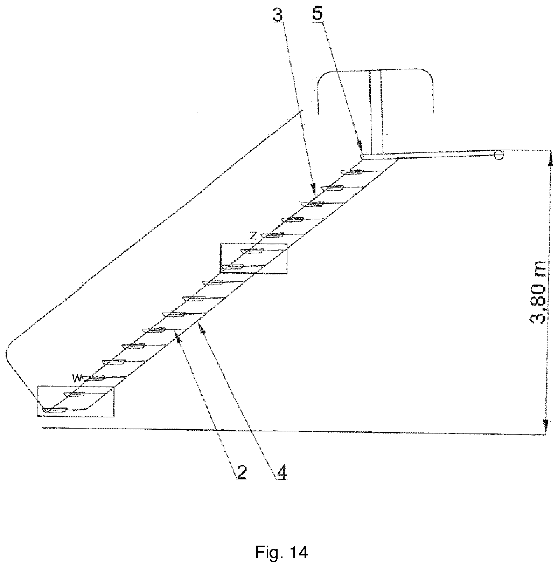

- Figure 14: schematic display of the parallelogram staircase according to the invention in the upper position
- Figure 15: W detail
- Figure 16: Z detail
- Figure 17: graphic display of the door threshold heights according to aircraft types and heights they are reaching passenger stairs with the existing and new staircase

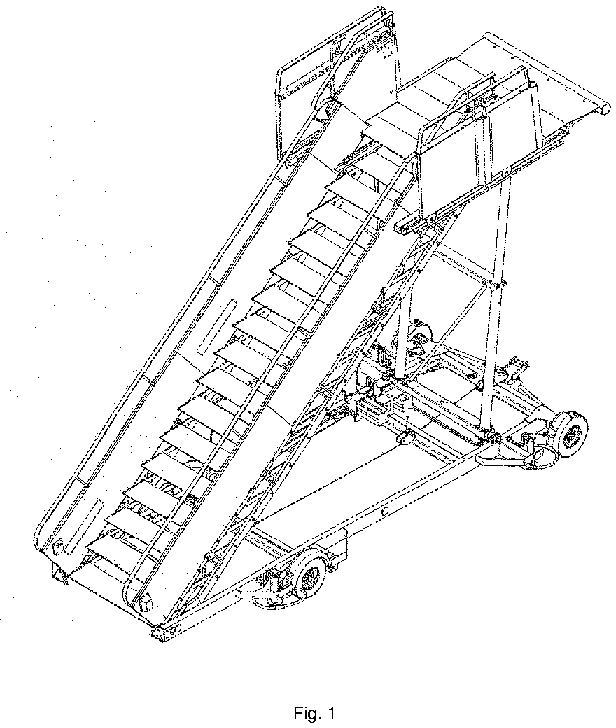

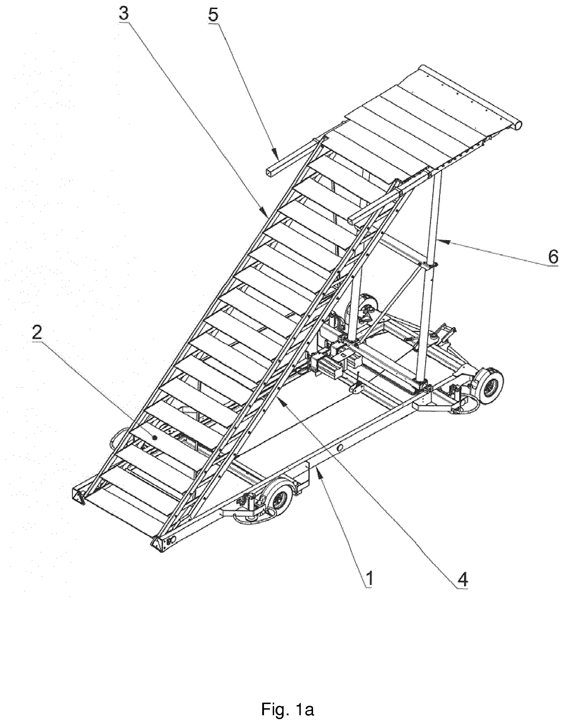

Figure 1 shows the passenger stairs and the staircase with 16 steps and the platform according to the invention, which can reach platform heights between 2.35m and 3.80m. Figure 1a shows passenger stairs without the staircase fences and the platform. An undercarriage 1 has an installed staircase consisting of sixteen identical steps 2, which are installed to a top link 3 and a bottom link 4, while on the top of the staircase a platform 5 is installed at the link 3 and 4. Between the undercarriage 1 and the platform 5, a lift frame 6 is located, which changes the slope of the staircase and has a random design.

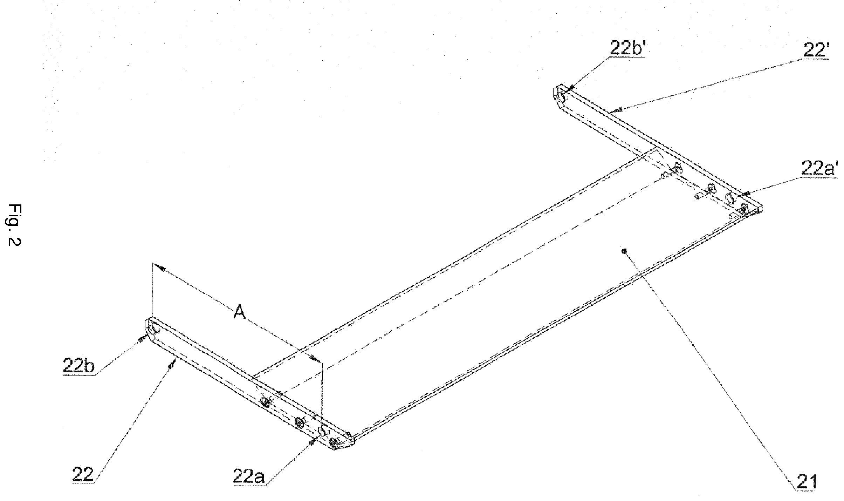

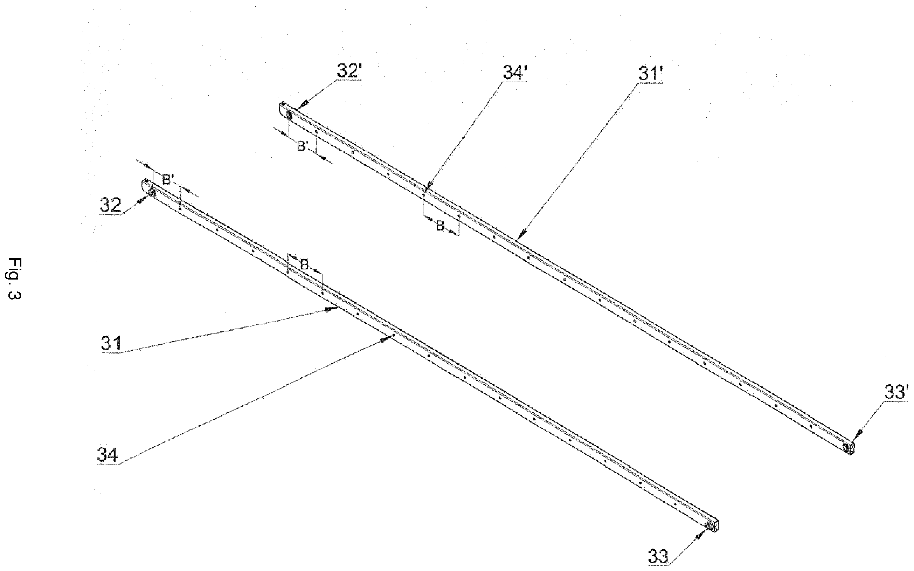

Each individual step 2 (Figure 2) consists of a staircase profile 21 and two step brackets 22 and 22'. Each bracket has two first holes, 22a and 22b on the first bracket 22 and 22a' and 22b' on the second bracket 22', which are located at a distance A from each other and through which the step 2 is articulately mounted on the links 3 and 4. The second holes 22a and 22a', as well as 22b and 22b' are pairwise coaxial. The top link (Figure 3) consists of two third brackets 31 and 31'. The brackets have two coaxial first bushes 32 and 32' above, where the platform 5 is articulately attached, and below they have coaxial second bushes 33 and 33', through which they are articulately attached to the undercarriage 1. On the third brackets 31 and 31' there are 15 pairs of coaxial through third holes 34 in 34' in equal spacings B, through which the steps 2 are articulately mounted to the connection brackets, whereby the first two of the holes 34 and 34' are at the spacing B away from the first bushes 32 and 32'. In passenger stairs the third brackets 31 and 31' usually carry the staircase fence or are part of it.

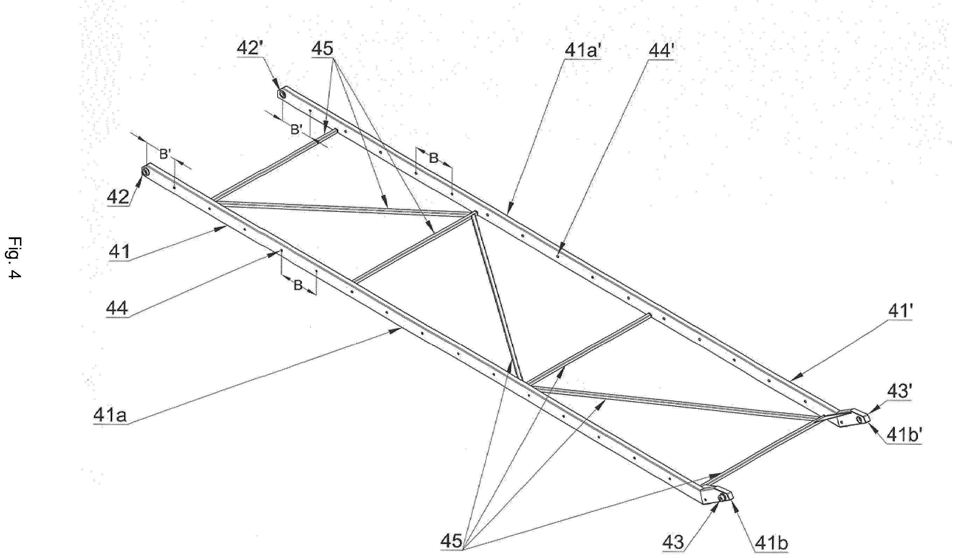

The bottom link 4 (Figure 4) consists of a left bottom link bracket 41 and a right bottom link bracket 41', which are composed of long bottom link brackets or parts 41a and 41a' and short bottom link brackets or parts 41b and 41b', which are coupled in pairs and at an angle. On the top of the long bottom link brackets 41a and 41a' the bottom link brackets 41 and 41' have coaxial third bushes 42 and 42', where the platform 5 is articulately mounted, and at the end of the short bottom link brackets 41b and 41b' they have swivel coaxial wheels 43 and 43', through which the link 4 is linearly movably connected to the undercarriage 1. The bottom link brackets 41 and 41' have sixteen pairs of coaxial through fourth holes 44 and 44', which are evenly spaced with the spacing B. The first two coaxial holes 44 and 44' are distanced from the third bushes 42 and 42' for the spacing B'. The bottom link brackets 41 and 41' are connected to each other with connections and reinforcements 45.

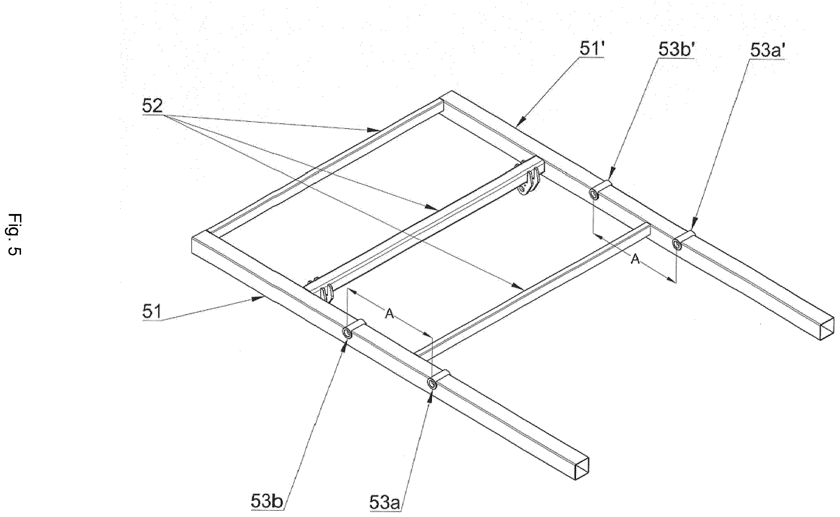

The main part of the platform frame (Figure 5) consists of fourth brackets 51 and 51', which are connected to connections 52. The fourth brackets 51 and 51' have built in two pairs of coaxial fourth bushes 53a and 53a' as well as 53b and 53b', where the links 3 and 4 are articulately attached. Between the paired bush axes there is the distance A.

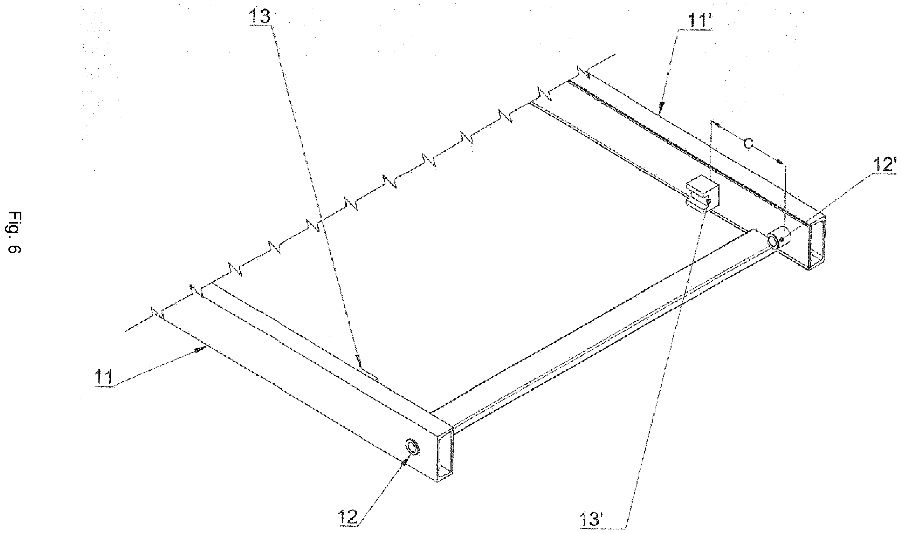

The staircase is mounted completely on the rear part of the undercarriage 1 (Figure 6) between the fifth brackets 11 and 11', which are an integral part of the undercarriage 1. Through the coaxial fifth bushes 12 and 12' the top link 3 is articulately attached to the undercarriage 1, and in the beds 13 and 13' the wheels 43 and 43' of the bottom link 4 are moving. The fifth bushes 12 and 12' and the beds 13 and 13' are in the same horizontal plane, while there is the distance C between the bush and the bed of the wheel on the same bracket.

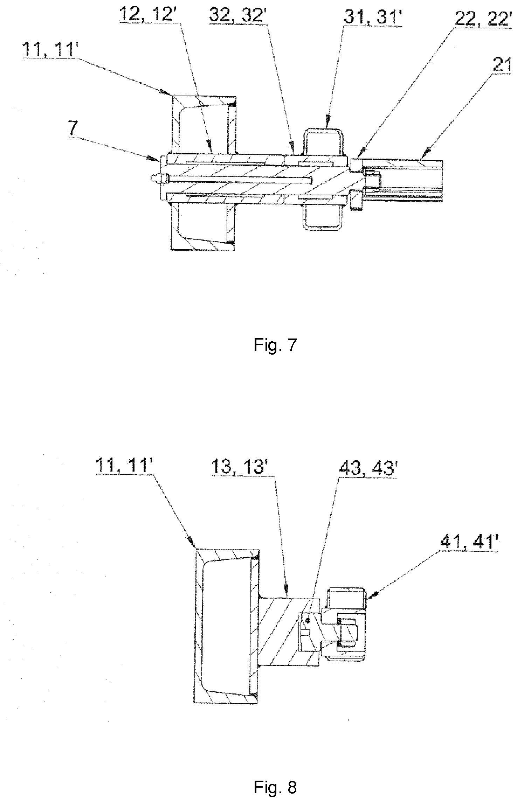

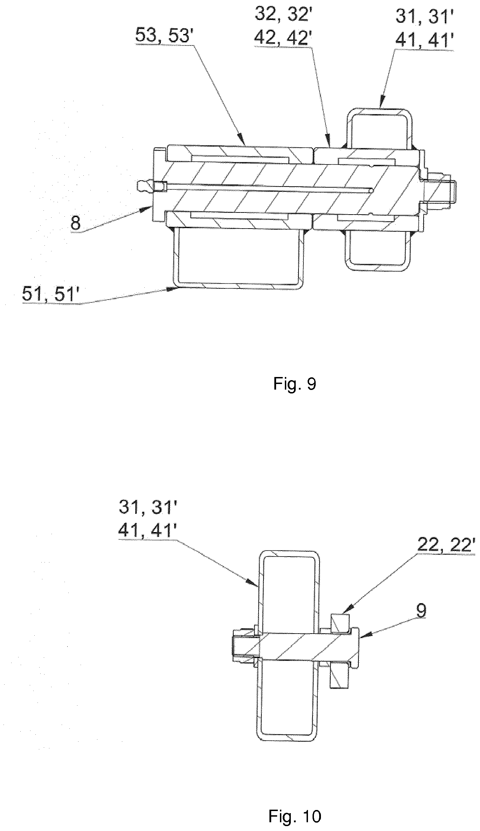

With the bolts 7, which are mounted through the pairs of first and fifth bushes 12 and 32 and 12' and 32', the attachments 1a are implemented, where the top link 3 (Figure 7) is articulately mounted to the undercarriage 1. The attachments 1b, through which the bottom link 4 is mounted to the undercarriage 1, are linearly movable attachments, where the wheels 43 and 43' of the bottom link 4 are inserted in the beds 13 in 13' of the undercarriage 1 (Figure 8). The platform 5 is attached articulately to the top link 3 and the bottom link 4 with bolts 8 which are in the attachments 5a mounted through the pairs of first and fourth bushes 32 and 53a and 32' and 53a' and in the attachments 5b through the pairs of third and fourth bushes 42 and 53b' and 42 and 53b' (Figure 9). Through the bolts 9 the steps 2 are articulately mounted on the links 3 and 4 (Figure 10). In the attachments 2a of the steps 2 the bolts 9 are mounted to the top link 3 through one first and one third holes 22a and 34 as well as one second hole and the other third hole 22a' in 34', and in the attachments 2b of the steps 2 they are mounted to the bottom link 4 through the other first hole and one fourth hole 22b and 44 as well as through the other second hole and the other fourth hole 22b' and 44'. The exception is the attachment of the bottom-most step 2 to the top link 3, which is performed with the two bolts 7 through the holes 22a and 22a' within the articulated attachments 1a (Figure 7).

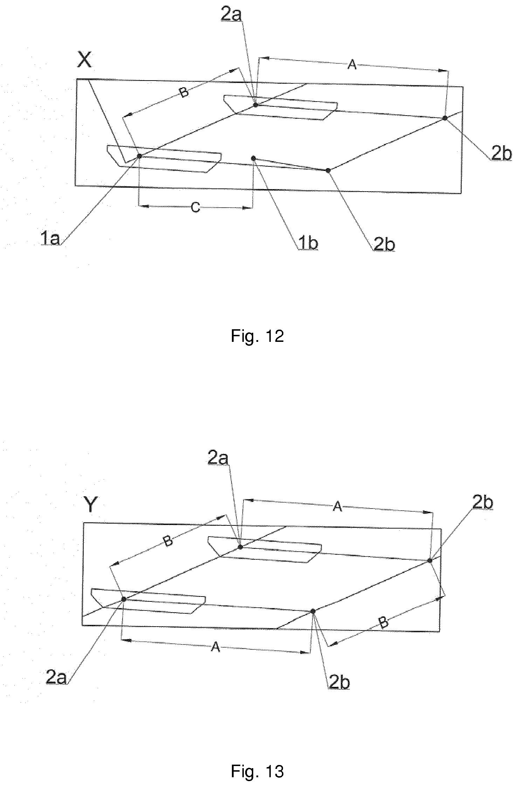

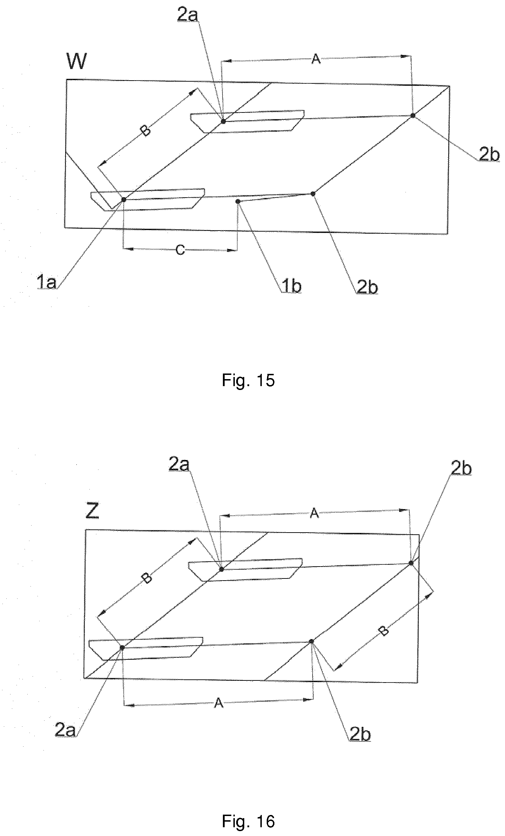

The parallelogram staircase with the walking surfaces incline system according to the invention in question is assembled so that the top link 3 and the bottom link 4 are attached between the undercarriage 1 and platform 5; the connections are conjoined by sixteen identical steps 2 (Figure 1 and 1a). The attachments 2a and 2b of the individual step 2 to the link 3 and link 4 there is the distance A (Figure 13 and 16). Between the attachments 2a of two adjacent steps 2 to the link 3, as well as between the attachments 2b of these steps to the link 4 there is the distance B. The attachments 2a and 2b of two random adjacent steps, connected with the links 3 and 4, form a parallelogram, which has two pairs of symmetrical and parallel sides of lengths A and B. The parallelogram also contains the attachments 5a and 5b of the platform 5 and 2a and 2b of the nearest step 2, since there is the distance A between the attachments 5a and 5b and the distance B' between the attachments 2a and 5a as well as between the attachments 2b and 5b.

The form of the parallelogram enables the maintenance of the parallelism of the walking surfaces of the steps 2 and the platform 5 as well as the connections 3 and 4 during the adjustment of the staircase slope with the lifting of frame 6, while the height and the depth of the stairs change evenly. Due to the more solid design of the platform the distance B' is smaller than the distance B, thus adjusting the height of the platform, which could be considered as the highest step, to the height of the other steps. The expansion of the work area of the passenger stairs is possible, because the distance C between the attachments 1a and 1b of the links 3 and 4 to the undercarriage 1 is smaller than the distance A between the attachments of the platform 5 and the steps 2 at the links 3 and 4 (Figure 12 and 15). Consequently the distances between the attachment 1b and the attachments 2b and 5b are larger than the distances between the attachment 1a and the attachments 2a and 5a. At the change of the staircase slope, the attachments 2b and 5b move by a greater distance than the attachments 2a and 5a, which changes the incline of the walking surfaces of the steps 2 and the platform 5. Due to the rigid bottom link 4 geometric deviations between the positions of the attachments 1b occur at different slopes of the staircase, thus the attachments 1b are linearly movable along the beds 13 and 13' of the undercarriage 1. Between the undercarriage 1 and the platform 5 the lifting frame 6 is located, through which the slope of the staircase changes and which is of random design.

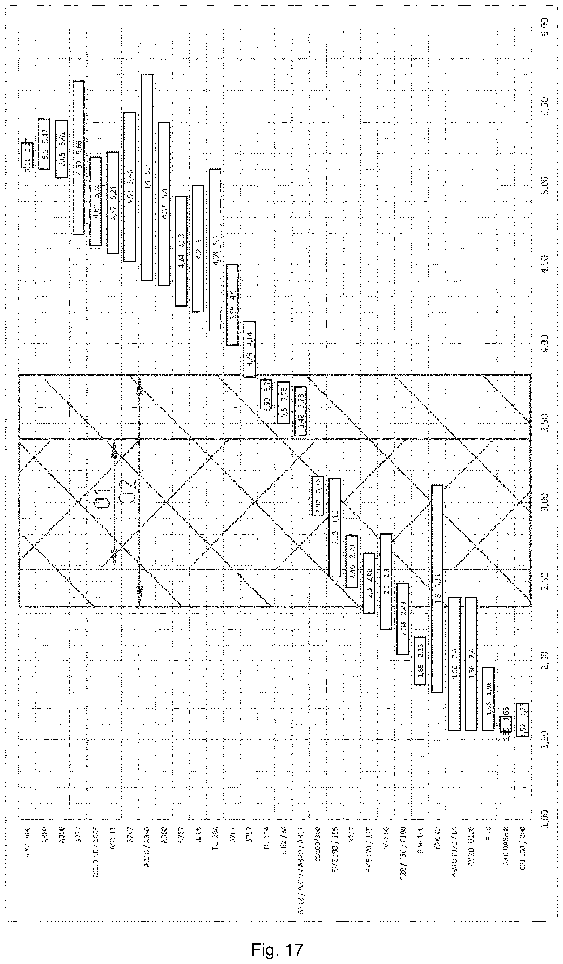

The current standard for passenger stairs in support aircraft equipment, EN 12312-1:2013 prescribes the height of the stairs between 145mm and 210mm and the depth between 250mm and 320mm, the incline of the walking surfaces at ± 3° and the slope of the stairs at 24°-40°. The staircase with sixteen steps according to the invention and the 1.7m long platform achieves the heights of the platform between 2.35m and 3.8m under consideration of the EN 12312-1:2013 standard, whereby at the platform height of 2.35m the slope of the staircase is 24°, the incline of the walking surfaces - 3°, the height of the stairs is 152mm and the depth of the stairs 299mm, while at the height of the platform of 3.8m the slope of the staircase is 40°, the incline of the walking surfaces +3°, the height of the stairs 202mm and the depth of the stairs 268mm. The present invention thus enables the increase of the height range of the platform for equipping airplanes by more than 50%. The graph showing data about the door threshold heights of different types of airplanes and the work area of passenger stairs with sixteen steps and a platform with an ordinary parallelogram staircase (O1) as well as the expanded work area of the parallelogram staircase according to the invention (O2) is shown in Figure 17.

The solution which increases the height range of the passenger stairs platform with sixteen steps to achieve the heights between 2.4m and 3.8m enables supply of the Airbus A318, A319, A320 and A321 as well as the Boeing B737 airplanes with a single device. Airports thus require fewer different passenger stairs, the other steps are not moved as much, their operation requires fewer people, and all this jointly contributes to time and financial savings of airports. The simple constructional solution prevents a large number of changes on the existing stairs as well as the costs which would arise due to the changes, maintains small overall dimensions, mass and the existing configuration of the vehicle, while the passenger stairs still meet the provisions of the EN 12312-1 standard regarding security.

The current standard for passenger stairs in support aircraft equipment, EN 12312-1:2013 prescribes the height and depth dimensions of the stairs, the incline of the walking surfaces and the slope of the staircase, which all correspond with the distances A, B and C of the described staircase. By changing these distances, the staircase can be adapted to other prescribed dimensions values, which might be required by foreign standards or a renewed EN 12312-1 standards, whereby consequently the height range of the staircase platform also changes. The components of passenger stairs can have a shape that is different than the prescribed, if the attachment positions enabling the described functions of the passenger stairs parallelogram staircase expanding the work area are maintained.

The parallelogram staircase with the expanded work area according to the invention is suitable for use on passenger stairs with one or multiple steps and a platform.

## Claims

1. A parallelogram staircase with a walking surfaces incline system which is mounted on an undercarriage (1) and includes a bottom link (4), a top link (3), multiple steps with walking surfaces (2), preferably 16 steps, and a platform (5) where between the undercarriage (1) and the platform (5) there is a lifting frame (6) changing the slope of the staircase, wherein the top link (3) and the bottom link (4) are attached between the undercarriage (1) and the platform (5), the links (3 and 4) being linked by identical steps (2); wherein there is a distance A between attachments (2a and 2b) of an individual step (2) at the top link (3) and the bottom link (4) wherein there is a distance B between the attachments (2a) of two adjacent steps (2) at the top link (3), as well as between the attachments (2b) of these steps at the bottom link (4); that the parallelogram also consists of first attachments (5a and 5b) of the platform (5) to the top link (3) and to the bottom link (4) and of the second attachments (2a and 2b) of the nearest step (2) to the platform, wherein the distance between the first attachments (5a and 5b) is the distance A and the distance between pairs of first and second attachments (2a and 5a; 2b and 5b) is the distance B'; **characterized in that**
the bottom link (4) consists of a left bottom link (41) and a right bottom link (41'), which are composed of long bottom link parts (41a and 41a') and short bottom link parts (41b and 41b'), which are coupled in pairs and at an angle;
that a distance C between third attachments (1a and 1b) of the top link and the bottom link (3 and 4) to the undercarriage (1) is smaller than the distance A; that the distances between the third attachment (1b) of the bottom link (4) and the pair of first and second attachments (2b and 5b) of the bottom link (4) are larger than the distances between the third attachment (1a) of the top link (3) the pair of first and second attachments (2a and 5a) of the top link (3), such that at the same change of the staircase slope the pair of attachments (2b and 5b) of the bottom link (4) is moved by a greater distance than the pair of attachments (2a and 5a) of the top link (3), which causes a change in the incline of the walking surfaces of steps (2) and the platform (5);
that geometrical deviations between the positions of the third attachments (1b) of the rigid bottom link (4) at different staircase slopes are accommodated by the third attachments (1b) of the bottom link (4) being linearly moveable along beds (13 and 13') of the undercarriage (1).

2. The parallelogram staircase according to claim 1 **characterised in that** the expansion of the work area with regard to supplying airplanes through door thresholds at different heights is enabled by the staircase geometry defined by the distances A, B and C.

3. The parallelogram staircase according to claim 1 and 2, **characterised in that** each individual step (2) consists of a stair profile (21) and two stair brackets (22 and 22'); that each bracket has first two holes (22a and 22b) at the first bracket (22) and second holes (22a' and 22b') at the second bracket (22'), which are at the distance A and through which the step (2) is mounted on the links (3 and 4); that the holes (22a and 22a' as well as 22b and 22b') are coaxial in pairs; that the top link (3) consists of two third brackets (31 and 31') which are not connected to each other; that the brackets have first coaxial bushes on top (32 and 32'), where a platform (5) is articulately mounted, and second coaxial bushes (33 and 33') on the bottom through which they are articulately mounted to the undercarriage (1); that the third brackets (31 and 31') have fifteen pairs of coaxial through third holes (34 and 34'), equally spaced at the distances B between the bushes, through which the steps (2) are articulately mounted to the connection brackets, whereby the first of the third two holes (34 and 34') are at the distance B' from the first bushes (32 and 32'); that the bottom links (41 and 41') have coaxial third bushes (42 and 42') on the top of the long bottom link parts (41a and 41a'), where the platform (5) is articulately mounted; that the bottom links (41 and 41') have swivel coaxial wheels (43 and 43') attached at the end of the short bottom link brackets (41b in 41b'), through which the link (4) is linearly movably connected along the beds (13 and 13') of the undercarriage (1) to the undercarriage (1); that the bottom links (41 and 41') have sixteen pairs of coaxial fourth holes (44 and 44'), which are spaced evenly at the distance B; that the first two coaxial holes (44 and 44') are at the distance B' from the third bushes (42 and 42'); that the bottom links (41 and 41') are interconnected with connections and reinforcements (45); that the main part of the platform supporting frame consists of fourth brackets (51 and 51'), which are connected through connections (52); that the fourth brackets (51 and 51') have built in two pairs of coaxial fourth bushes (53a and 53a' as well as 53b and 53b'), where the links (3 and 4) are articulately attached.

4. The parallelogram staircase according to claim 1, 2 and 3, **characterised in that** the staircase is mounted completely on the rear part of the undercarriage (1) between the fifth brackets (11 and 11'), which are a constituent part of the undercarriage (1); that through coaxial fifth bushes (12 and 12') the top link (3) is articulately attached to the undercarriage (1), and in the beds (13 and 13') wheels (43 and 43') of the bottom link (4) are moving; that the fifth bushes (12 and 12') and the beds (13 and 13') are in the same horizontal plane.

5. The parallelogram staircase according to any of the previous claims, **characterised in that** through bolts (7), which are mounted through one first and one fifth bush (12 and 32) and the other first and the other fifth bush (12' and 32'), the attachments (1a) are provided, where the top link (3) is articulately attached to the undercarriage (1), that the attachments (1b), through which the bottom link (4) is mounted to the undercarriage (1), are linearly movable attachments, where the wheels (43 and 43') of the bottom link (4) are inserted in the beds (13 and 13') of the undercarriage (1); that the platform (5) is articulately attached to the top link (3) and the bottom link (4) with bolts (8), which are mounted at the attachments (5a) through the pair of first and fourth bushes (32 and 53a) and the other pair of first and fourth bushes (32' and 53a') and at the attachments (5b) through the pair of third and fourth bushes (42 and 53b) and the other pair of third and fourth bushes (42 and 53b'); that through bolts (9) at the connection (3 and 4) the steps (2) are articulately mounted; that the bolts (9) at the attachments (2a) of the steps (2) to the top link (3) are mounted through one first and one third hole (22a and 34) as well as through one second and the other third hole (22a' and 34'), and at the attachments (2b) of the steps (2) to the bottom link (4) through the other first hole and one fourth hole (22b and 44) and through the other second hole and the other fourth hole (22b' and 44'); that the attachment of the bottom-most step (2) to the top link (3) is an exception, which is performed with the bolts (7) through the first holes (22a and 22a') within the articulated attachments (1a).

6. The parallelogram staircase according to any of the previous claims, **characterised in that** in passenger stairs the third brackets (31 and 31') usually carry or are a part of a staircase fence.

7. The parallelogram staircase according to any of the previous claims, **characterised in that** the platform height and the staircase slope as well as the walking surfaces incline are changed by the lifting frame (6) between the undercarriage (1) and the staircase, the preferred platform (5), where the lift is enabled by one or multiple linear actuators of any type.

8. The parallelogram staircase according to any of the previous claims, **characterised in that** the attachments (1b) are linearly movable.

9. The parallelogram staircase according to any of the previous claims, **characterised in that** all attachments, with the exception of the attachment 1b, are articulated.

10. Passenger stairs with a parallelogram staircase according to any of the claims.

## Patentansprüche

1. Parallelogrammtreppe mit einem Neigungsverstellsystem, die an einem Fahrgestell (1) angebracht ist und ein unteres Bindeglied (4), ein oberes Bindeglied (3), mehrere Stufen mit Laufflächen (2), vorzugsweise 16 Stufen und eine Plattform (5) umfasst, wobei zwischen dem Fahrwerk (1) und der Plattform (5) ein, die Steigung der Treppe verändernder Hubrahmen (6), vorhanden ist, wobei das obere Bindeglied (3) und das untere Bindeglied (4) zwischen dem Fahrwerk (1) und der Plattform (5) befestigt sind, wobei die Bindeglieder (3, 4) durch gleiche Stufen (2) verbunden sind; wobei ein Abstand A zwischen den Verbindungen (2a und 2b) einer Einzelstufe (2) am oberen Bindeglied (3) und unteren Bindeglied (4) vorhanden ist, wobei ein Abstand B zwischen den Verbindungen(2a) zweier benachbarter Stufen (2) am oberen Bindeglied (3) sowie zwischen den Verbindungen (2b) dieser Stufen am unteren Bindeglied (4) vorhanden ist; dass das Parallelogramm ebenfalls aus ersten Verbindungen (5a und 5b) der Plattform (5) zum oberen Bindeglied (3) und zum unteren Bindeglied (4) sowie aus zweiten Verbindungen (2a und 2b) der nächstliegenden Stufe (2) zur Plattform besteht, wobei der Abstand zwischen den ersten Verbindungen (5a und 5b) der Abstand A ist und der Abstand zwischen Paaren von ersten und zweiten Verbindungen (2a und 5a; 2b und 5b) der Abstand B' ist;
**dadurch gekennzeichnet, dass**
das untere Bindeglied (4) aus einem linken unteren Bindeglied (41) und einem rechten unteren Bindeglied (41') besteht, die jeweils aus langen unteren Bindegliedteilen (41a und 41a') und kurzen unteren Bindegliedteilen (41b und 41b') zusammengesetzt sind, die paarweise und in einem Winkel gekoppelt sind; dass der Abstand C zwischen den dritten Verbindungen (1a und 1b) des oberen Bindeglieds und des unteren Bindeglieds (3 und 4) zum Fahrwerk (1) kleiner als der Abstand A ist; dass die Abstände zwischen der dritten Verbindung (1b) des unteren Bindeglieds (4) und dem Paar erster und zweiter Verbindungen (2b und 5b) des unteren Bindeglieds (4) größer sind als die Abstände zwischen der dritten Verbindung (1a) des oberen Bindeglieds (3) und dem Paar erster und zweiter Verbindungen (2a und 5) des oberen Bindeglieds (3), so dass bei gleichmäßiger Änderung der Treppensteigung das Paar der Verbindungen (2b und 5b) des unteren Bindeglieds (4) um einen größeren Abstand bewegt wird als das Paar der Verbindungen (2a und 5a) des oberen Bindeglieds (3), was eine Änderung der Neigung der Laufflächen der Stufen (2) und der Plattform (5) bewirkt; dass die geometrischen Abweichungen zwischen den Positionen der dritten Verbindungen (1b) des starren unteren Bindeglieds (4) bei unterschiedlichen Treppenneigungen durch dritte Verbindungen (1b) des unteren Bindeglieds (4), die entlang der Lager (13 und 13') des Fahrwerks (1) linear bewegbar sind, ausgeglichen werden.

2. Parallelogrammtreppe nach Anspruch 1, **dadurch gekennzeichnet, dass** die Ausweitung des Arbeitsbereichs bezüglich der Beladung von Flugzeugen, aufgrund verschieden hoher Türschwellen, durch die durch die Abstände A, B und C definierte Treppengeometrie ermöglicht wird.

3. Parallelogrammtreppe nach Anspruch 1 und 2, **dadurch gekennzeichnet, dass** jede einzelne Stufe (2) aus einem Treppenprofil (21) und zwei Treppenträgern (22 und 22') besteht; dass jeder Träger jeweils erste zwei Löcher (22a und 22b) am ersten Träger (22) und zweite Löcher (22a' und 22b') die sich im Abstand A befinden, am zweiten Träger (22') aufweist, und durch die die Stufen (2) an den Bindegliedern (3, 4) befestigt werden; dass die Löcher (22a und 22a' sowie 22b und 22b') paarweise koaxial sind; dass das obere Bindeglied (3) aus zwei nicht miteinander verbundenen dritten Trägern (31 und 31') besteht; dass die Träger an der Oberseite (32 und 32') erste koaxiale Buchsen aufweisen, an denen die Plattform (5) gelenkig angebracht ist, und zweite koaxiale Buchsen (33 und 33') am Boden aufweisen, durch die sie gelenkig am Fahrgestell (1) angebracht sind; dass die dritten Träger (31 und 31') fünfzehn Paare von koaxialen dritten Durchlöchern (34 und 34') aufweisen, die gleichmäßig in den Abständen B zwischen den Buchsen beabstandet sind, durch welche die Stufen (2) gelenkig an den Verbindungsträgern angebracht sind, wobei die ersten der dritten zwei Löcher (34 und 34') einen Abstand B' von den ersten Buchsen (32 und 32') aufweisen; dass die unteren Bindeglieder (41 und 41') koaxiale dritte Buchsen (42 und 42') auf der Oberseite der langen unteren Bindeglieder (41a und 41a') aufweisen, an denen die Plattform (5) gelenkig angebracht ist; dass die unteren Bindeglieder (41 und 41') koaxiale Schwenkräder (43 und 43') aufweisen, die am Ende der kurzen unteren Bindeglieder (41b und 41b') befestigt sind, durch welche das Bindeglied (4) entlang der Lager (13 und 13') des Fahrwerks (1) linear beweglich mit dem Fahrwerk (1) verbunden ist; dass die unteren Bindeglieder (41 und 41') sechzehn Paare von koaxialen vierten Löchern (44 und 44') aufweisen, die im Abstand B gleichmäßig beabstandet sind; dass die ersten zwei koaxialen Löcher (44 und 44') im Abstand B' von den dritten Buchsen (42 und 42') positioniert sind; dass die unteren Bindeglieder (41 und 41') mit Anschlüssen und Verstärkungen (45) miteinander verbunden sind; dass der Hauptteil des Plattformtragrahmens aus vierten Trägern (51 und 51') besteht, die durch Verbindungen (52) miteinander verbunden sind; dass in den vierten Trägern (51 und 51') zwei Paare von koaxialen vierten Buchsen (53a und 53a' sowie 53b und 53b') eingebaut sind, an denen die Bindeglieder (3, 4) gelenkig angebracht sind.

4. Parallelogrammtreppe nach Anspruch 1, 2 und 3, **dadurch gekennzeichnet, dass** die Treppe vollständig am hinteren Teil des (1) Fahrwerks, zwischen den fünften Trägern (11 und 11'), die Bestandteil des Fahrwerks (1) sind, angebracht ist; dass durch die koaxialen fünften Buchsen (12 und 12') das obere Bindeglied (3) gelenkig mit dem Fahrwerk (1) verbunden ist, und in den Lagern (13 und 13') die Räder (43 und 43') des unteren Bindeglieds (4) beweglich sind; dass die fünften Buchsen (12 und 12') und die Lager (13 und 13') in der gleichen horizontalen Ebene liegen.

5. Parallelogrammtreppe nach einem der vorhergehenden Ansprüche, **dadurch gekennzeichnet, dass** durch Durchbolzen (7), die durch eine erste und eine fünfte Buchse (12 und 32) und die andere erste und die andere fünfte Buchse (12' und 32') angeordnet sind, Verbindungen (1a) vorgesehen sind, wobei das obere Bindeglied (3) gelenkig mit dem Fahrgestell (1) verbunden ist, dass die Verbindungen (1b), durch die das untere Bindeglied (4) am Fahrgestell (1) angebracht ist, linear beweglich sind, wobei die Räder (43 und 43') des unteren Bindeglieds (4) in die Lager (13 und 13') des Fahrwerks (1) eingesetzt sind; dass die Plattform (5) gelenkig mit dem oberen Bindeglied (3) und dem unteren Bindeglied (4) durch Bolzen (8) verbunden ist, die an den Verbindungen (5a) durch das Paar erster und vierter Buchsen (32 und 53a) angebracht sind, und das andere Paar erster und vierter Buchsen (32' und 53a') und an den Verbindungen (5b) durch das Paar dritter und vierter Buchsen (42 und 53b') und das andere Paar dritter und vierter Buchsen (42 und 53b'); dass die Stufen (2) durch die Bolzen (9) an der Verbindung (3, 4) angebracht sind; dass die Bolzen (9) an den Verbindungen (2a) der Stufen (2) mit dem oberen Bindeglied (3) durch ein erstes und ein drittes Loch (22a und 34) sowie durch ein zweites und das andere dritte Loch (22a' und 34') angeordnet sind, und an den Verbindungen (2b) der Stufen (2) mit dem unteren Bindeglied (4) durch das andere erste Loch und ein viertes Loch (22b und 44) und durch das andere zweite Loch und das andere vierte Loch (22b' und 44') angeordnet sind; dass die Befestigung der untersten Stufe (2) an dem oberen Bindeglied (3) eine Ausnahme ist, welche durch die Bolzen (7) durch die ersten Löcher (22a und 22a') innerhalb der angelenkten Verbindung (1a) durchgeführt ist.

6. Parallelogrammtreppe nach einem der vorhergehenden Ansprüche, **dadurch gekennzeichnet, dass** in der Passagiertreppe die dritten Träger (31 und 31'), üblicherweise das Treppengeländer tragen oder Bestandteil dessen sind.

7. Parallelogrammtreppe nach einem der vorhergehenden Ansprüche, **dadurch gekennzeichnet, dass** die Plattformhöhe, die Treppensteigung sowie die Laufflächenneigung, bevorzugt die Plattformhöhe (5), durch den Hubrahmen (6) zwischen dem Fahrgestell (1) und der Treppe verändert werden können, wobei der Hub durch einen oder mehrere Linearaktuatoren beliebiger Art ermöglicht wird.

8. Parallelogrammtreppe nach einem der vorhergehenden Ansprüche, **dadurch gekennzeichnet, dass** die Verbindungen (1b) linear beweglich sind.

9. Parallelogrammtreppe nach einem der vorhergehenden Ansprüche, **dadurch gekennzeichnet, dass** alle Verbindungen, mit Ausnahme des Aufsatzes 1b, angelenkt sind.

10. Passagiertreppe mit einer Parallelogrammtreppe nach einem der Ansprüche.

## Revendications

1. Escalier en forme de parallélogramme avec un système d'inclinaison de la surface des marches qui est monté sur un châssis de roulement (1) et comprend une liaison inférieure (4), une liaison supérieure (3), plusieurs marches avec des surfaces de marche (2), de préférence 16 marches, et une plate-forme (5), entre le châssis de roulement (1) et la plate-forme (5) il y a un cadre de levage (6) changeant la pente de l'escalier, la liaison supérieure (3) et la liaison inférieure (4) étant fixées entre le châssis de roulement (1) et la plate-forme (5), les liaisons (3 et 4) étant reliées par des marches identiques (2) ; une distance A sépare les fixations (2a et 2b) de chaque marche (2) au niveau de la liaison supérieure (3) et de la liaison inférieure (4), une distance B sépare les fixations (a) de deux marches adjacentes (2) au niveau de la liaison supérieure (3), ainsi que les fixations (2b) de ces marches au niveau de la liaison inférieure (4) ; le parallélogramme comporte également les premières fixations (5a et 5b) de la plate-forme (5) à la liaison supérieure (3) et à la liaison inférieure (4) et les deuxièmes fixations (2a et 2b) de la marche (2) la plus proche à la plate-forme, la distance entre les premières fixations (5a et 5b) étant la distance A et la distance entre les paires de premières et deuxièmes fixations (2a et 5a ; 2b et 5b) étant la distance B' ;
**caractérisé en ce que**
la liaison inférieure (4) est constituée d'une liaison inférieure gauche (41) et d'une liaison inférieure droite (41'), qui sont composées de parties longues de liaison inférieure (41a et 41a') et de parties courtes de liaison inférieure (41b et 41b'), qui sont couplés par paires et selon un certain angle ; que la distance C entre les troisièmes fixations (1a et 1b) de la liaison supérieure et de la liaison inférieure (3 et 4) par rapport au châssis de roulement (1) est inférieure à la distance A ; que les distances entre la troisième fixation (1b) de la liaison inférieure (4) et la paire de premières et deuxièmes fixations (2b et 5b) de la liaison inférieure (4) sont plus grandes que les distances entre la troisième fixation (1a) de la liaison supérieure (3) de la paire de premières et deuxièmes fixations (2a et 5a) de la liaison supérieure (3), de telle sorte qu'au même changement de pente de l'escalier, la paire de fixations (2b et 5b) de la liaison inférieure (4) est déplacée par une distance supérieure à la paire de fixations (2a et 5a) de la liaison supérieure (3), ce qui provoque un changement de l'inclinaison des surfaces des marches (2) et de la plate-forme (5) ; que les écarts géométriques entre les positions des troisièmes fixations (1b) de la liaison inférieure rigide (4) à différentes pentes d'escalier sont reçus par les troisièmes fixations (1b) de la liaison inférieure (4) qui sont mobiles linéairement le long des bases (13 et 13') du châssis de roulement (1).

2. Escalier en forme de parallélogramme selon la revendication 1, **caractérisé en ce que** l'extension de la zone de travail pour le ravitaillement d'avions à travers des seuils de porte à différentes hauteurs est rendu possible par la géométrie de l'escalier définie par les distances A, B et C.

3. Escalier en forme de parallélogramme selon les revendications 1 et 2, **caractérisé en ce que** chaque marche (2) est constituée d'un profil d'escalier (21) et de deux supports d'escalier (22 et 22') ; que chaque support comporte deux premiers trous (22a et 22b) au niveau du premier support (22) et des deuxièmes trous (22a' et 22b') au niveau du deuxième support (22'), qui sont qui sont séparés par la distance A et à travers lesquels la marche (2) est montée sur les liaisons (3 et 4) ; que les trous (22a et 22a' ainsi que 22b et 22b') sont coaxiaux par paires ; que la liaison supérieure (3) est constituée de deux troisièmes supports (31 et 31') qui ne sont pas reliés l'un à l'autre ; que les supports comportent des premières douilles coaxiales sur leur dessus (32 et 32'), où la plate-forme (5) est montée de manière articulée, et des deuxièmes douilles coaxiales (33 et 33') sur leur partie inférieure à travers laquelle elles sont montées de manière articulée sur le châssis de roulement (1) ; que les troisièmes supports (31 et 31') ont quinze paires de troisièmes trous coaxiales (34 et 34'), espacés de manière égale par les distances B entre les douilles, à travers lesquelles les marches (2) sont montées de manière articulée sur les supports de liaison, le premier des deux troisièmes trous (34 et 34') étant à la distance B' des premières douilles (32 et 32') ; que les liaisons inférieures (41 et 41') présentent des troisièmes douilles coaxiales (42 et 42') sur la partie supérieure des parties longues de liaison inférieures (41a et 41a'), où la plate-forme (5) est montée de manière articulée; que les liaisons inférieures (41 et 41') ont des roues coaxiales pivotantes (43 et 43') fixées à l'extrémité des support courts de liaison inférieure (41b et 41b'), à travers lesquels la liaison (4) est reliée de façon mobile linéairement le long des bases (13 et 13') du châssis de roulement (1) au châssis de roulement (1) ; que les liaisons inférieures (41 et 41') présentent seize paires de quatrièmes trous coaxiaux (44 et 44'), qui sont espacés régulièrement par la distance B ; que les deux premiers trous coaxiaux (44 et 44') sont à la distance B' des troisièmes douilles (42 et 42') ; que les liaisons inférieures (41 et 41') sont reliées entre elles par des raccords et des renforts (45) ; que la partie principale du support de la plate-forme est constituée de quatrièmes supports (51 et 51') qui sont reliés par des raccords (52) ; que les quatrièmes supports (51 et 51') intègrent deux paires de quatrièmes douilles coaxiales (53a et 53a' ainsi que 53b et 53b'), les liaisons (3 et 4) étant fixées de manière articulée.

4. Escalier en forme de parallélogramme selon les revendications 1, 2 et 3, **caractérisé en ce que** l'escalier est monté entièrement sur la partie arrière du châssis de roulement (1) entre les cinquièmes supports (11 et 11'), qui sont une partie constitutive du châssis de roulement (1) ; qu'à travers les cinquièmes douilles coaxiales (12, et 12') la liaison supérieure (3) est fixée de manière articulée au châssis de roulement (1), et dans les bases (13 et 13') les roues (43 et 43') de la liaison inférieure (4) se déplacent ; que les cinquièmes douilles (12 et 12') et les bases (13 et 13') se trouvent dans le même plan horizontal.

5. Escalier en forme de parallélogramme selon l'une quelconque des revendications précédentes, **caractérisé en ce que** par le biais des boulons (7), qui sont montés à travers une première et une cinquième douille (12 et 32) et l'autre première et l'autre cinquième douille (12' et 32'), les fixations (1a) sont assurées, la liaison supérieure (3) étant fixée de manière articulée au châssis de roulement (1), que les fixations (1b), à travers lesquelles la liaison inférieure (4) est montée sur le châssis de roulement (1), sont des fixations mobiles linéairement, les roues (43 et 43') de la liaison inférieure (4) étant insérées dans les bases (13 et 13') du châssis de roulement (1) ; que la plate-forme (5) est fixée de manière articulée à la liaison supérieure (3) et à la liaison inférieure (4) par des boulons (8), qui sont montés au niveau des fixations (5a) à travers la paire de premières et quatrièmes douilles (32 et 53a) et l'autre paire de première et quatrième douilles (32' et 53a') et au niveau des fixations (5b) à travers la paire de troisième et quatrième douilles (42 et 53b) et l'autre paire de troisième et quatrième douilles (42 et 53b') ; qu'à travers les boulons (9) au niveau de la liaison (3 et 4), les marches (2) sont montées de manière articulée ; que les boulons (9) au niveau des fixations (2a) des marches (2) à la liaison supérieure (3) sont montés à travers un premier et un troisième trous (22a and 34) ainsi qu'à travers un deuxième et l'autre troisième trou (22a' et 34'), et au niveau des fixations (2b) des marches (2) à la liaison inférieure (4) à travers l'autre premier trou et un quatrième trou (22b and 44) et à travers l'autre deuxième trou et l'autre quatrième trou (22b' et 44') ; que la fixation de la marche (2) la plus basse à la liaison supérieure (3) est une exception, qui est assurée par les boulons (7) à travers les premiers trous (22a et 22a') à l'intérieur des fixations articulées (1a).

6. Escalier en forme de parallélogramme selon l'une quelconque des revendications précédentes, **caractérisé en ce que**, dans les escaliers de passagers, les troisièmes supports (31 et 31') portent habituellement ou font partie d'un garde-corps d'escalier.

7. Escalier en forme de parallélogramme selon l'une quelconque des revendications précédentes, **caractérisé en ce que** la hauteur de la plate-forme et la pente de l'escalier ainsi que les surfaces inclinées des marches sont modifiées par le cadre de levage (6) entre le châssis de roulement (1) et l'escalier, la plate-forme préférée (5), où le levage est activé par un ou plusieurs actionneurs linéaires de n'importe quel type.

8. Escalier en forme de parallélogramme selon l'une quelconque des revendications précédentes, **caractérisé en ce que** les fixations (1b) sont mobiles linéairement.

9. Escalier en forme de parallélogramme selon l'une quelconque des revendications précédentes, **caractérisé en ce que** toutes les fixations, à l'exception de la fixation 1b, sont articulées.

10. Escalier pour passagers avec escalier en forme de parallélogramme selon l'une quelconque des revendications précédentes.
